(19) Europäisches Patentamt
European Patent Office
Office européen des brevets

(11) EP 4 461 773 A1

(12) **EUROPEAN PATENT APPLICATION**

(43) Date of publication:
**13.11.2024 Bulletin 2024/46**

(21) Application number: **23172433.7**

(22) Date of filing: **09.05.2023**

(51) International Patent Classification (IPC):
***C09B 57/00*** *(2006.01)*

(52) Cooperative Patent Classification (CPC):
**C09B 57/00; C09B 57/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Ecole Centrale de Marseille**
  **13013 Marseille (FR)**
- **Université d'Aix Marseille**
  **13007 Marseille (FR)**
- **Centre National de la Recherche Scientifique**
  **75016 Paris (FR)**
- **Commissariat à l'Energie Atomique et aux Energies Alternatives**
  **75015 Paris (FR)**
- **Universite d'Evry Val d'Essonne**
  **91000 Evry (FR)**

(72) Inventors:
- **SAAIDI, Pierre-Loïc**
  **91710 VERT-LE-PETIT (FR)**
- **DELLA-NEGRA, Oriane**
  **11100 NARBONNE (FR)**
- **MARTINEZ, Alexandre**
  **13090 Aix en Provence (FR)**

(74) Representative: **Cabinet Becker et Associés**
**25, rue Louis le Grand**
**75002 Paris (FR)**

(54) **FLUORESCENT HEMICRYPTOPHANES AND USES THEREOF**

(57) The invention relates to a fluorescent hemicryptophane of formula (I). It further relates to the use of these fluorescent hemicryptophanes for detecting, binding, recognizing, capturing, trapping, extracting, quantifying, or dosing chlordecone or hydroxychlordecone, particularly in a water sample.

EP 4 461 773 A1

## Description

### FIELD OF THE INVENTION

The present invention relates to the environmental field, more particularly to new fluorescent hemicryptophanes compounds and uses thereof for the recognition, trapping, and quantification of organic pollutants.

### BACKGROUND OF THE INVENTION

Chlordecone (CLD) is an organochlorine pesticide that has been synthesized and used worldwide. This molecule is composed of a bishomocubane cage, ten chlorine atoms and a ketone function which hydrates spontaneously, leading to a stable gem-diol form known as chlordecone-hydrate. Its particular structure gives it specific properties such as a strong hydrophobicity (solubility estimated around 2 mg/L in water at pH 7), a strong affinity for organic matter, and above all an acute and chronic toxicity. CLD has been produced for 18 years in United States from 1958 to 1976. It was responsible for the environmental pollution of the James River and caused acute toxicity to workers and nearby inhabitants. Although its production and used in United States was forbidden by the Environmental Protection Agency in 1976, this pesticide was applied in the French West Indies (FWI) against the banana black weevil from 1972 to 1993. Classified as Persistent Organic Pollutant in 2009, CLD is currently responsible for numerous environmental, socio-economic and public health problems in the French West Indies (FWI) or French Antilles. Notably, it still contaminates the hydric system, soils, the food chain and consequently humans.

Several analytical techniques have been developed over the years to quantify and monitor chlordecone, such as Gas Chromatography coupled to tandem Mass Spectrophotometry (GC-MS/MS) and Liquid Chromatography coupled to tandem Mass Spectrophotometry (LC-MS/MS). However, these analytical techniques require expensive devices and equipment and remain limited because of moderate to high uncertainties due to the strong fixation of chlordecone on organic matter.

To address these drawbacks, supramolecular approaches were developed and investigated. Over the past few years, it has thus been developed fluorescence-based tools and synthesized organic hosts with recognition capabilities to detect pesticides. Indeed, the association of cyclodextrins, calixarenes, or cucurbiturils with fluorophores has allowed the detection and quantification of pesticides, including organochlorines, in environmental matrices. Regarding CLD, two categories of hosts for encapsulating have been described so far.

In 2016, β- and γ-cyclodextrins were found to complex chlordecone and, once supported on activated carbons, these receptors enabled to improve chlordecone retention within water filtration process (Rana et al., Chemical Engineering Journal 2016, 293, 82-89).

In 2019, hemicryptophanes comprising a cyclotriveratrylene (CTV) unit linked to a $C_3$-symmetrical tris(2-aminoethyl)amine (tren) moiety, which showed efficient CLD recognition properties with a rather high binding constant estimated at $2.1 \times 10^4$ $L.mol^{-1}$ (Martinez et al., New J. Chem., 2019, 43, 10222). Further hemicryptophanes having a CTV unit linked to a $C_3$-symmetrical tris(2-aminoethyl)amine (tren) moiety with different fluorophores groups were developed and presented at "50$^{e}$ congrès du Groupe Français de recherche sur les Pesticides" on 18-20 May 2022 at Namur, Belgium. These hemicryptophanes have an efficient CLD recognition with a binding constant estimated in a large range of $3.0 \times 10^3$ -$1.9 \times 10^5$ $L.mol^{-1}$.

However, it thus remains a need to develop new fluorescent hemicryptophanes having an improved affinity for chlordecone or its derivatives and improving its detection levels, and which are suitable for convenient, fast, cheap, and robust methods to detect CLD directly on the polluted sites.

### SUMMARY OF THE INVENTION

In this context, the inventors have provided new fluorescent hemicryptophanes of formula (I) having an improved affinity for CLD with binding constants higher than $4.5 \times 10^5$ $L.mol^{-1}$. The hemicryptophanes of the invention were found to be particularly efficient for fluorescence detection of CLD and correspond as new inexpensive tools to detect CLD in an environmental sample at very low concentrations.

The present invention thus relates to a compound of the following formula (I):

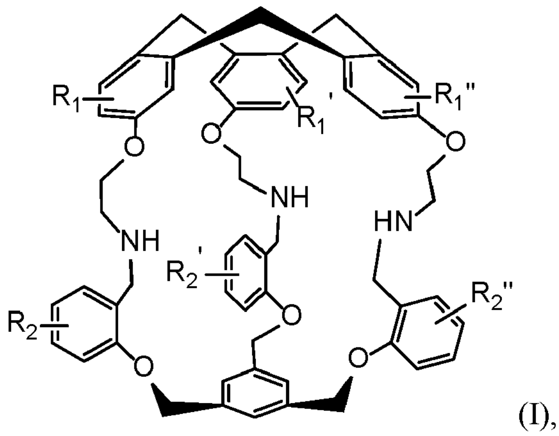

(I),

wherein:

> $R_1$, $R_{1'}$, and $R_{1''}$ represent independently a radical selected in the group consisting of:

- a hydrogen,
- a halogen,
- a hydroxy,
- a ($C_1$-$C_6$)alkoxy group,
- a -$CO_2$-$R_a$ or a ($C_1$-$C_6$)alkyl-$CO_2$-$R_a$ group with $R_a$ being a hydrogen or a ($C_1$-$C_6$)alkyl group,
- a -O-($CH_2$-$CH_2$-O)$_n$-OH with n is an integer comprised between 1 and 600;
- a phenyl unsubstituted or substituted by a radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,
- a ($C_2$-$C_6$)alkynyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group,
- a nitrile,
- a triazole, and
- a phosphate group; and

> $R_2$, $R_{2'}$, and $R_{2''}$, represent independently a radical selected in the group consisting of:

- a phenyl substituted by a radical selected in the group consisting of a -$CO_2$-$R_b$ with $R_b$ being a hydrogen or a ($C_1$-$C_6$)alkyl group, and a -O-($CH_2$-$CH_2$-O)$_n$-OH with n is an integer comprised between 1 and 600;
- an aryl group, preferably a pyrenyl group;
- a ($C_2$-$C_6$)alkynyl group unsubstituted or substituted by a radical selected in the group consisting of a ($C_1$-$C_6$)alkyl group and a phenyl substituted by radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,
- a triazole, and
- a ($C_2$-$C_6$)alkenyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group,

and a salt thereof.

The present invention further relates to a use of a compound of formula (I) or a salt thereof

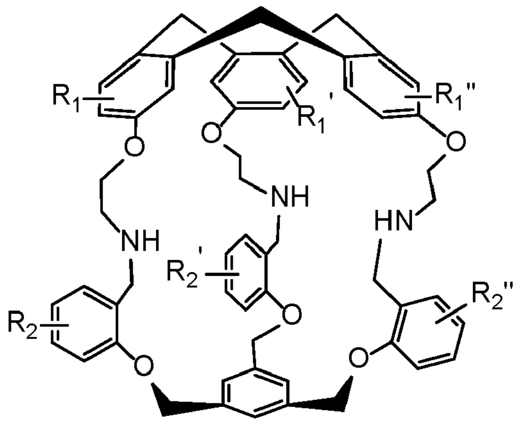

(I),

wherein:

> $R_1$, $R_{1'}$, and $R_{1''}$ represent independently a radical selected in the group consisting of:

- a hydrogen,
- a halogen,
- a hydroxy,
- a $(C_1-C_6)$alkoxy group,
- a $-CO_2-R_a$ or a $(C_1-C_6)$alkyl-$CO_2-R_a$ group with $R_a$ being a hydrogen or a $(C_1-C_6)$alkyl group,
- a $-O-(CH_2-CH_2-O)_n-OH$ with n is an integer comprised between 1 and 600;
- a phenyl unsubstituted or substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a $(C_2-C_6)$alkynyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,
- a nitrile,
- a triazole, and
- a phosphate group; and

> $R_2$, $R_{2'}$, and $R_{2''}$, represent independently a radical selected in the group consisting of:

- a phenyl unsubstituted or substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600;
- an aryl group, preferably a pyrenyl group;
- a $(C_2-C_6)$alkynyl group unsubstituted or substituted by a radical selected in the group consisting of a $(C_1-C_6)$alkyl group and a phenyl unsubstituted or substituted by radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a triazole, and
- a $(C_2-C_6)$alkenyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,

for detecting, binding, recognizing, capturing, trapping, extracting, quantifying, or dosing chlordecone or hydroxychlordecone.

In a preferred embodiment, the compounds of the invention or the compounds used in the invention has the following formula (I')

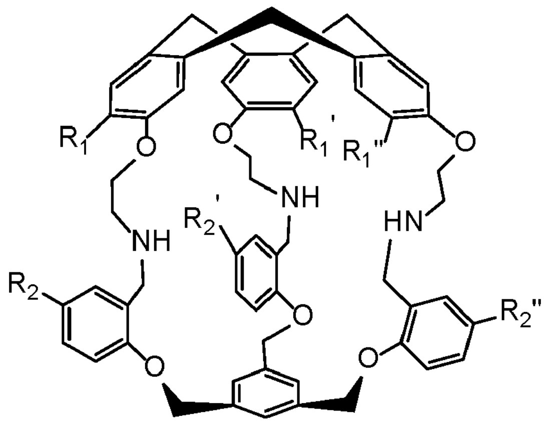

(I'),

in which $R_1$, $R_{1'}$, $R_{1''}$, $R_2$, $R_{2'}$, and $R_{2''}$, are such as defined herein.

In a particular embodiment, the compounds of the invention or the compounds used in the invention are such that $R_1$, $R_{1'}$, and $R_{1''}$ are identical. Preferably, $R_1$, $R_{1'}$, and $R_{1''}$ represent independently a ($C_1$-$C_6$)alkoxy group, more preferably a methoxy group.

In a further particular embodiment, the compounds of the invention are such that $R_2$, $R_{2'}$, and $R_{2''}$, are identical. Preferably, $R_2$, $R_{2'}$, and $R_{2''}$, represent a phenyl substituted by a -$CO_2$-$R_b$ with $R_b$ being a ($C_1$-$C_6$)alkyl group, preferably a methyl group, or $R_2$, $R_{2'}$, and $R_{2''}$ represent a pyrenyl group.

In a further particular embodiment, the compounds used in the invention are such that $R_2$, $R_{2'}$, and $R_{2''}$, are identical. Preferably, $R_2$, $R_{2'}$, and $R_{2''}$, represent a phenyl unsubstituted or substituted by a -$CO_2$-$R_b$ with $R_b$ being a ($C_1$-$C_6$)alkyl group, preferably a methyl group, or $R_2$, $R_{2'}$, and $R_{2''}$, represent a pyrenyl group.

A preferred compound of formula (I) of the invention has the following formulae:

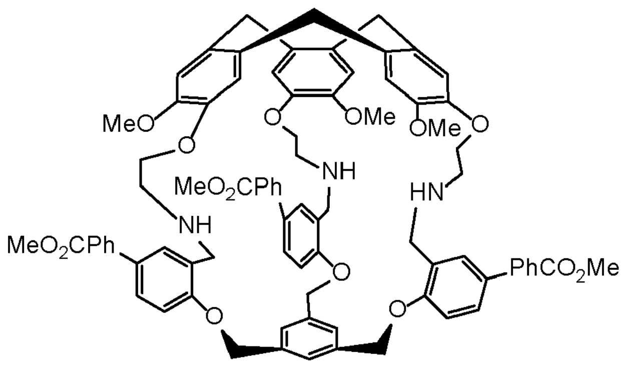

or

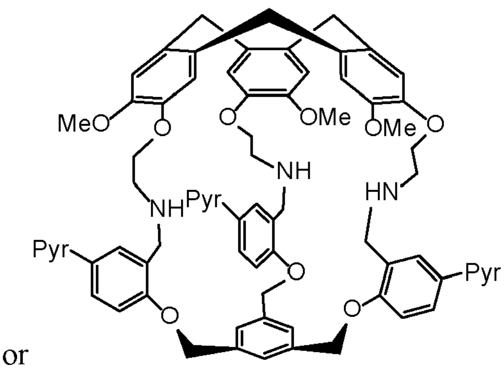

.

A preferred compound used in the present invention has the following formulae:

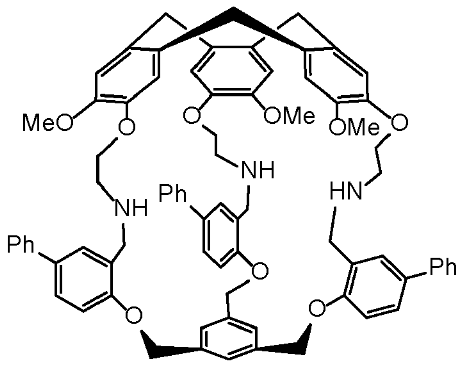

,

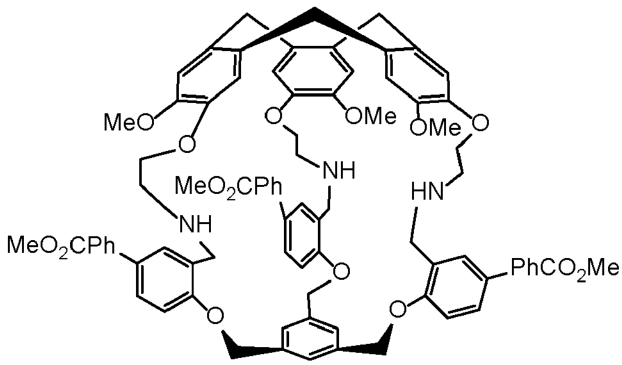

,

or

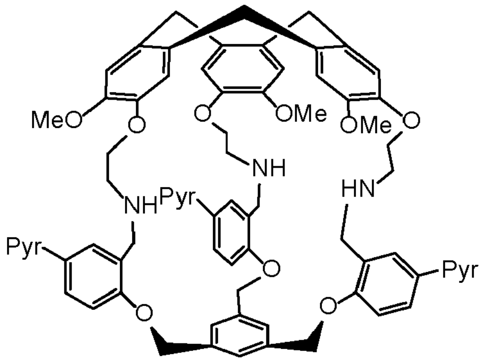

A further object of the invention is a composition comprising a compound as defined herein and dimethylsulfoxide.

A further object of the invention is a hemicryptophane cage comprising a compound as defined herein and chlordecone or hydroxychlordecone, preferably chlordecone.

A further object of the invention is a process or a method for detecting and/or dosing and/or quantifying chlordecone or hydroxychlordecone in a water sample comprising the following steps:

a) adding a water sample comprising chlordecone or hydroxychlordecone to a composition comprising a compound as defined herein and dimethylsulfoxide to form a hemicryptophane-chlordecone or a hemicryptophane-hydroxychlordecone cage; and

b) detecting and/or dosing and/or quantifying said hemicryptophane-chlordecone or hemicryptophane-hydroxychlordecone cage by fluorescence.

Another object of the invention a kit comprising (i) a compound as defined herein or a composition adding a composition comprising a compound as defined herein and dimethylsulfoxide, and (ii) a water sample comprising chlordecone or hydroxychlordecone as a combined preparation for detecting, binding, recognizing, capturing, trapping, extracting, quantifying, or dosing chlordecone or hydroxychlordecone. A further object of the invention is a use of such a kit for detecting, binding, recognizing, capturing, trapping, extracting, quantifying, or dosing chlordecone or hydroxychlordecone.

**LEGENDS OF THE FIGURES**

**Figure 1:** Flurorescent emission spectra (at $\lambda_{abs}^{max}$ ) DMSO with 2% of water of a solution of hemicryptophane **5** (5 $\mu$M) (Figure 1A), (e) hemicryptophane **8** (0.5 $\mu$M) (Figure 1B), and hemicryptophane **9** (5 $\mu$M) (Figure 1C), upon progressive addition of chlordecone (5 mM for hosts 5, 8 and 9 and 0.5 mM).

**Figure 2:** Evolution of relative fluorescence intensity as a function of the [chlordecone]/[hemicryptophane] ratio: at 297 nm for host **5** (Figure 2A), 349 nm for host **8** (Figure 2B), and at 274nm for host **9** (Figure 2C). Curves were fitted with Bindfit program.

**DETAILED DESCRIPTION OF THE INVENTION**

**Definitions**

According to the present invention, the terms below have the following meanings:

The terms mentioned herein with prefixes such as for example $C_1$-$C_3$, $C_1$-$C_6$ or $C_2$-$C_6$ can also be used with lower numbers of carbon atoms such as $C_1$-$C_2$, $C_1$-$C_5$, or $C_2$-$C_5$. If, for example, the term $C_1$-$C_3$ is used, it means that the corresponding hydrocarbon chain may comprise from 1 to 3 carbon atoms, especially 1, 2 or 3 carbon atoms. If, for example, the term $C_1$-$C_6$ is used, it means that the corresponding hydrocarbon chain may comprise from 1 to 6 carbon atoms, especially 1, 2, 3, 4, 5 or 6 carbon atoms. If, for example, the term $C_2$-$C_6$ is used, it means that the corresponding hydrocarbon chain may comprise from 2 to 6 carbon atoms, especially 2, 3, 4, 5 or 6 carbon atoms. The term "alkyl" refers to a saturated, linear or branched aliphatic group. The term "($C_1$-$C_3$)alkyl" more specifically

means methyl, ethyl, propyl, or isopropyl. The term "($C_1$-$C_6$)alkyl" more specifically means methyl, ethyl, propyl, isopropyl, butyl, isobutyl, *tert*-butyl, pentyl or hexyl.

The term "alkynyl" refers to an unsaturated, linear or branched aliphatic group comprising at least one carbon-carbon triple bound. The term "($C_2$-$C_6$)alkynyl" more specifically means ethynyl, propynyl, isopropynyl, butynyl, isobutynyl, pentynyl, or hexynyl.

The term "alkoxy" or "alkyloxy" corresponds to the alkyl group as above defined bonded to the molecule by an -O- (ether) bond. ($C_1$-$C_3$)alkoxy includes methoxy, ethoxy, propyloxy, and isopropyloxy. ($C_1$-$C_6$)alkoxy includes methoxy, ethoxy, propyloxy, isopropyloxy, butyloxy, isobutyloxy, tert-butyloxy, pentyloxy and hexyloxy. In a preferred embodiment, the "alkoxy" or "alkyloxy" is a methoxy.

The term "aryl" corresponds to a mono- or bi- or tri or tetra- or penta- or hexa-cyclic aromatic hydrocarbons having from 6 to 24 carbon atoms. For instance, the term "aryl" includes phenyl, biphenyl, naphthyl, and pyrenyl. In a preferred embodiment, the aryl is a phenyl or a pyrenyl. The term "halogen" corresponds to a fluorine, chlorine, bromine, or iodine atom.

The expression "substituted by at least one radical" or "substituted by a radical" means that the radical is substituted by one or several groups of the list.

The expression "a -O-($CH_2$-$CH_2$-O)$_n$-OH with n is an integer comprised between 1 and 600" corresponds to a -O-PEG group. The term "PEG" ("polyethylene glycol") includes for instance PEG-400, PEG-600, PEG-1500, PEG-4000, PEG-6000. In a preferred embodiment, n is an integer comprised between 1 and 200"

The expression "a-$CO_2$-$R_a$ with $R_a$ being a hydrogen or a ($C_1$-$C_6$)alkyl group" corresponds to ester (with $R_a$ being a ($C_1$-$C_6$)alkyl group) and carboxyl group (with $R_a$ being a hydrogen). It is well understood that a carboxyl group also comprise a carboxylate group.

According to the invention, a compound has the following formula (I):

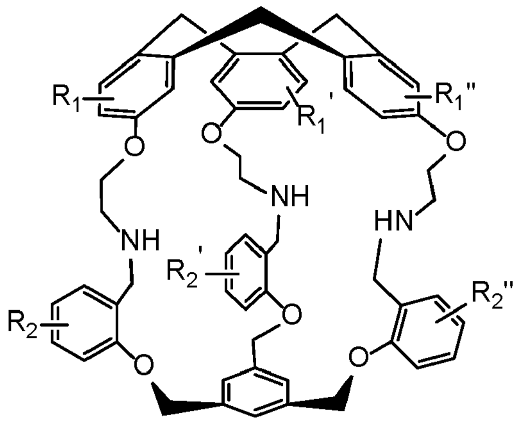

(I),

wherein:

➢ $R_1$, $R_{1'}$, and $R_{1''}$ represent independently a radical selected in the group consisting of:

- a hydrogen,
- a halogen,
- a hydroxy,
- a ($C_1$-$C_6$)alkoxy group,
- a -$CO_2$-$R_a$ or a ($C_1$-$C_6$)alkyl-$CO_2$-$R_a$ group with $R_a$ being a hydrogen or a ($C_1$-$C_6$)alkyl group,
- a -O-($CH_2$-$CH_2$-O)$_n$-OH with n is an integer comprised between 1 and 600, preferably between 1 and 200;
- a phenyl unsubstituted or substituted by a radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,
- a ($C_2$-$C_6$)alkynyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group,
- a nitrile,
- a triazole, and
- a phosphate group; and

> $R_2$, $R_{2'}$, and $R_{2''}$, represent independently a radical selected in the group consisting of:

- a phenyl substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600, preferably between 1 and 200;
- an aryl group, preferably a pyrenyl group;
- a $(C_2-C_6)$alkenyl group unsubstituted or substituted by a radical selected in the group consisting of a $(C_1-C_6)$alkyl group and a phenyl unsubstituted or substituted by radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a triazole, and
- a $(C_2-C_6)$alkynyl group unsubstituted or substituted by a radical selected in the group consisting of a $(C_1-C_6)$alkyl group and a phenyl substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,

and a salt thereof.

More particularly, a compound of the invention has the following formula (I'):

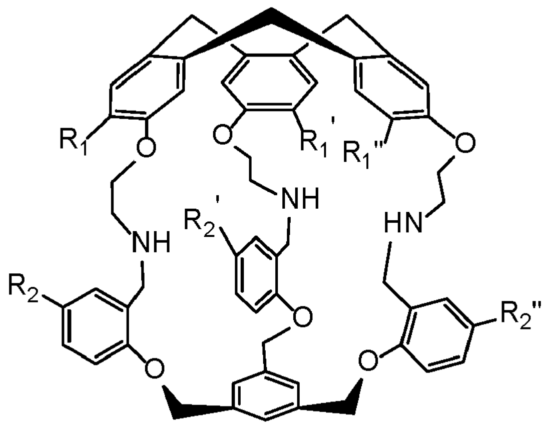

(I'),

in which $R_1$, $R_{1'}$, $R_{1''}$, $R_2$, $R_{2'}$, and $R_{2''}$, are such as defined herein.

In a particular embodiment $R_1$, $R_{1'}$, and $R_{1''}$ are identical. In a further particular embodiment, $R_1$, $R_{1'}$, and $R_{1''}$ are different. Preferably, $R_1$, $R_{1'}$, and $R_{1''}$ are identical.

According to the invention, $R_1$, $R_{1'}$, and $R_{1''}$ represent independently a radical selected in the group consisting of:

- a hydrogen,
- a halogen,
- a hydroxy,
- a $(C_1-C_6)$alkoxy group,
- a $-CO_2-R_a$ or a $(C_1-C_6)$alkyl-$CO_2-R_a$ group with $R_a$ being a hydrogen or a $(C_1-C_6)$alkyl group,
- a $-O-(CH_2-CH_2-O)_n-OH$ with n is an integer comprised between 1 and 600;
- a phenyl unsubstituted or substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a $(C_2-C_6)$alkynyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,
- a nitrile,
- a triazole, and
- a phosphate group.

In a particular embodiment, $R_1$, $R_{1'}$, and $R_{1''}$ represent independently a radical selected in the group consisting of:

- a $(C_1-C_6)$alkoxy group, preferably a methoxy, and
- a $(C_2-C_6)$alkynyl group, preferably an ethynyl substituted by a phenyl.

In a more particular embodiment, $R_1$, $R_{1'}$, and $R_{1''}$ represent independently a $(C_1-C_6)$alkoxy group. Preferably, $R_1$, $R_{1'}$, and $R_{1''}$ represent a methoxy group.

In a particular embodiment $R_2$, $R_{2'}$, and $R_{2''}$ are identical. In a further particular embodiment, $R_2$, $R_{2'}$, and $R_{2''}$, are different. Preferably, $R_2$, $R_{2'}$, and $R_{2''}$, are identical.

According to the invention, $R_2$, $R_{2'}$, and $R_{2''}$ represent independently a radical selected in the group consisting of:

- a phenyl substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600, preferably between 1 and 200;
- an aryl group, preferably a pyrenyl group;
- a $(C_2-C_6)$alkenyl group unsubstituted or substituted by a radical selected in the group consisting of a $(C_1-C_6)$alkyl group and a phenyl unsubstituted or substituted by radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a triazole, and
- a $(C_2-C_6)$alkynyl group unsubstituted or substituted by a radical selected in the group consisting of a $(C_1-C_6)$alkyl group and a phenyl substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group.

In a particular embodiment, $R_2$, $R_{2'}$, and $R_{2''}$ represent independently a radical selected in the group consisting of:

- a phenyl substituted by a radical selected in the group consisting of a $-CO_2-R_b$ with $R_b$ being a hydrogen or a $(C_1-C_6)$alkyl group,
- an aryl group, preferably a pyrenyl group,
- a $(C_2-C_6)$alkenyl group, preferably an ethenyl substituted by a phenyl, and
- a $(C_2-C_6)$alkynyl , preferably an ethynyl substituted by a phenyl substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group.

In a more particular embodiment, $R_2$, $R_{2'}$, and $R_{2''}$ represent independently a radical selected in the group consisting of:

- a phenyl substituted by a $-CO_2-R_b$ with $R_b$ being a $(C_1-C_6)$alkyl group, preferably a methyl group, and
- a pyrenyl group.

In a preferred embodiment, a compound of formula (I) or (I') has the following formulae:

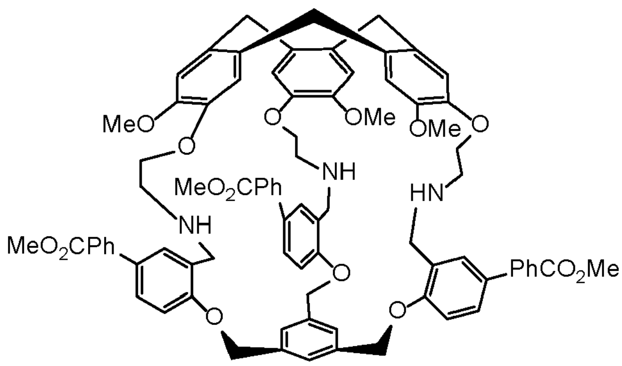

or

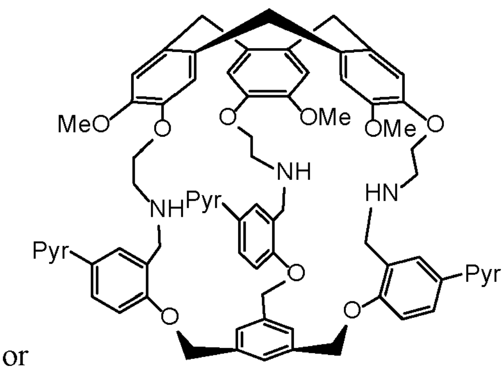

.

A further object of the invention is a use of a compound of formula (I) or a salt thereof

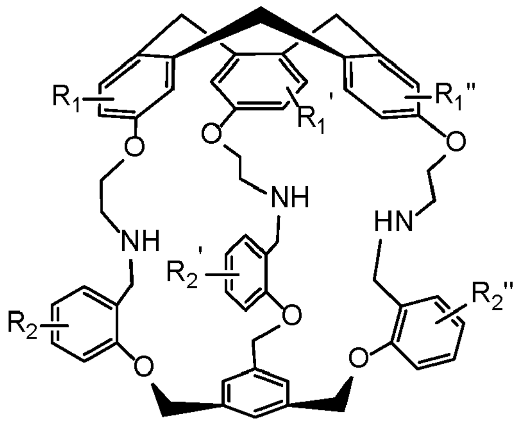

(I),

wherein:

➢ $R_1$, $R_{1'}$, and $R_{1''}$ represent independently a radical selected in the group consisting of:

- a hydrogen,
- a halogen,
- a hydroxy,
- a $(C_1-C_6)$alkoxy group,
- a $-CO_2-R_a$ or a $(C_1-C_6)$alkyl-$CO_2-R_a$ group with $R_a$ being a hydrogen or a $(C_1-C_6)$alkyl group,
- a $-O-(CH_2-CH_2-O)_n-OH$ with n is an integer comprised between 1 and 600, preferably between 1 and 200;
- a phenyl unsubstituted or substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a $(C_2-C_6)$alkynyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,
- a nitrile,
- a triazole, and
- a phosphate group; and

> $R_2$, $R_{2'}$, and $R_{2''}$, represent independently a radical selected in the group consisting of:

- a phenyl unsubstituted or substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600, preferably between 1 and 200;
- an aryl group, preferably a pyrenyl group;
- a $(C_2-C_6)$alkynyl group unsubstituted or substituted by a radical selected in the group consisting of a $(C_1-C_6)$alkyl group and a phenyl unsubstituted or substituted by radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a triazole, and
- a $(C_2-C_6)$alkenyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,

for detecting, binding, recognizing, capturing, trapping, extracting, quantifying, or dosing chlordecone or hydroxychlordecone.

More particularly, a compound used according to the invention has the following formula (I'):

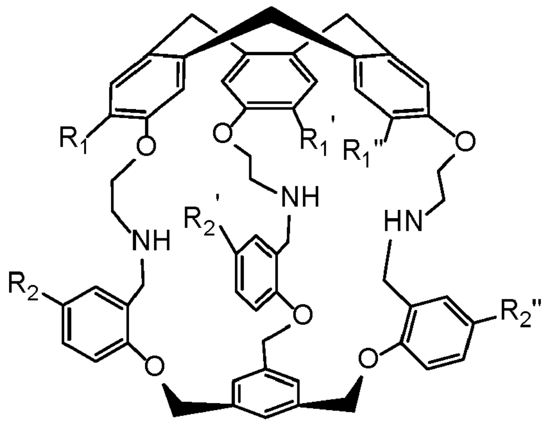

(I'),

in which $R_1$, $R_{1'}$, $R_{1''}$, $R_2$, $R_{2'}$, and $R_{2''}$, are such as defined herein.

In a particular embodiment, the compounds of formula (I) or (I') used in the present invention are such that $R_1$, $R_{1'}$, and $R_{1''}$ are identical. In a further particular embodiment, $R_1$, $R_{1'}$, and $R_{1''}$ are different. Preferably, $R_1$, $R_{1'}$, and $R_{1''}$ are identical.

According to the invention, the compounds of formula (I) or (I') used in the present invention are such that $R_1$, $R_{1'}$, and $R_{1''}$ represent independently a radical selected in the group consisting of:

- a hydrogen,
- a halogen,
- a hydroxy,
- a $(C_1-C_6)$alkoxy group,
- a $-CO_2-R_a$ or a $(C_1-C_6)$alkyl-$CO_2-R_a$ group with $R_a$ being a hydrogen or a $(C_1-C_6)$alkyl group,
- a $-O-(CH_2-CH_2-O)_n-OH$ with n is an integer comprised between 1 and 600, preferably between 1 and 200;
- a phenyl unsubstituted or substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a $(C_2-C_6)$alkynyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,
- a nitrile,
- a triazole, and

a phosphate group;

In a particular embodiment, the compounds of formula (I) or (I') used in the present invention are such that $R_1$, $R_{1'}$, and $R_{1''}$ represent independently a radical selected in the group consisting of:

- a $(C_1-C_6)$alkoxy group, preferably a methoxy, and
- a $(C_2-C_6)$alkynyl group, preferably an ethynyl substituted by a phenyl.

In a more particular embodiment, $R_1$, $R_{1'}$, and $R_{1''}$ represent independently a $(C_1-C_6)$alkoxy group. Preferably, $R_1$, $R_{1'}$, and $R_{1''}$ represent a methoxy group.

Preferably $R_1$, $R_{1'}$, and $R_{1''}$ are identical, and preferably independently represent a $(C_1-C_6)$alkoxy group, more preferably a methoxy group.

In a particular embodiment, the compounds of formula (I) or (I') used in the present invention are such that $R_2$, $R_{2'}$, and $R_{2''}$ are identical. In a further particular embodiment, $R_2$, $R_{2'}$, and $R_{2''}$ are different. Preferably, $R_2$, $R_{2'}$, and $R_{2''}$ are identical.

According to the invention, the compounds of formula (I) or (I') used in the present invention are such that $R_2$, $R_{2'}$, and $R_{2''}$ represent independently a radical selected in the group consisting of:

- a phenyl unsubstituted or substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600, preferably between 1 and 200;
- an aryl group, preferably a pyrenyl group;
- a $(C_2-C_6)$alkynyl group unsubstituted or substituted by a radical selected in the group consisting of a $(C_1-C_6)$alkyl

group and a phenyl unsubstituted or substituted by radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,

- a triazole, and
- a ($C_2$-$C_6$)alkenyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group.

In a particular embodiment, $R_2$, $R_{2'}$, and $R_{2''}$ represent independently a radical selected in the group consisting of:

- a phenyl unsubstituted or substituted by a radical selected in the group consisting of a -$CO_2$-$R_b$ with $R_b$ being a hydrogen or a ($C_1$-$C_6$)alkyl group,
- an aryl group, preferably a pyrenyl group,
- a ($C_2$-$C_6$)alkenyl group, preferably an ethenyl substituted by a phenyl, and
- a ($C_2$-$C_6$)alkynyl , preferably an ethynyl substituted by a phenyl unsubstituted or substituted by a radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group.

In a more particular embodiment, $R_2$, $R_{2'}$, and $R_{2''}$ represent independently a radical selected in the group consisting of:

- a phenyl unsubstituted or substituted by a radical selected in the group consisting of a -$CO_2$-$R_b$ with $R_b$ being a hydrogen or a ($C_1$-$C_6$)alkyl group,
- an aryl group, preferably a pyrenyl group,

In a preferred embodiment, the compounds of formula (I) or (I') used according to the invention are such that $R_2$, $R_{2'}$, and $R_{2''}$ $R_2$, $R_{2'}$, and $R_{2''}$, are identical, and preferably represent a phenyl unsubstituted or substituted by a -$CO_2$-$R_b$ with $R_b$ being a ($C_1$-$C_6$)alkyl group, preferably a methyl group, or a pyrenyl group.

In a more preferred embodiment, the compounds of formula (I) or (I') used according to the invention have the following formulae:

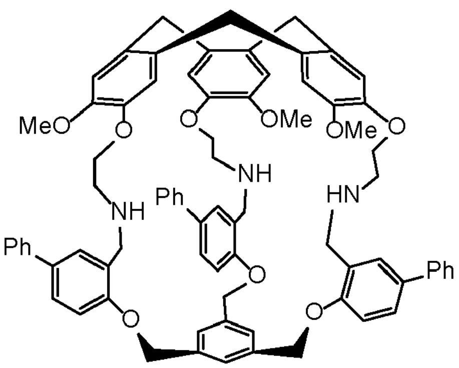
,
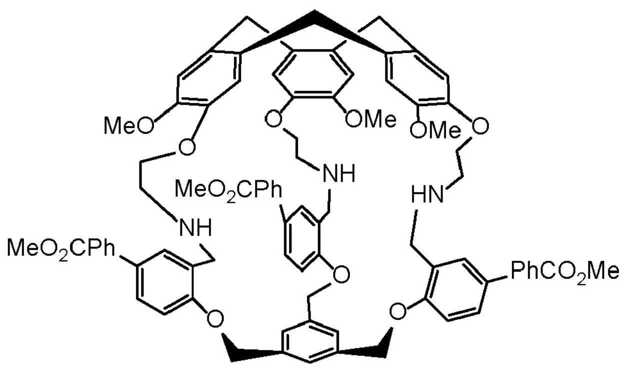
,

or

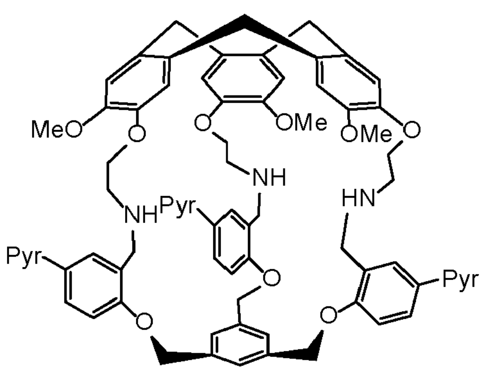
.

An object of the invention is a use of a compound as defined herein for detecting, binding, recognizing, capturing, trapping, extracting, quantifying, or dosing chlordecone or hydroxychlordecone.

A compound of formula (I) according to the invention is dissolved in DMSO and mixed with a water sample of chlordecone or hydroxychlordecone to form an hemicryptophane cage.

An object of the invention is a composition comprising a compound as defined herein and dimethylsulfoxide.

Another object of the invention a hemicryptophane cage comprising a compound of formula (I) as defined herein and chlordecone or hydroxychlordecone, preferably chlordecone.

In the context of the invention, a "hemicryptophane cage" corresponds to a macromolecular system in which chlordecone or hydroxychlordecone is complexed or captured or trapped by a compound as defined herein. Such a macromolecular system is also called a "hemicryptophane cage" or a "hemicryptophane complex". In a particular embodiment, the macromolecular system is a "compound of the invention-chlordecone" cage or complex. In a further particular embodiment, the macromolecular system is a "compound of the invention-hydroxychlordecone" cage or complex. Once the cage or the complex formed, a skilled person can detect and/or dose and/or quantify chlordecone or hydroxychlordecone by any conventional analytic methods such as NMR, fluorescence, preferably fluorescence.

An object of the invention thus relates to a process or a method for detecting and/or dosing and/or quantifying chlordecone or hydroxychlordecone in a water sample comprising the following steps:

a) adding a water sample comprising chlordecone or hydroxychlordecone to a composition comprising a compound as defined herein and dimethylsulfoxide to form a hemicryptophane-chlordecone or a hemicryptophane-hydroxychlordecone cage; and

b) detecting and/or dosing and/or quantifying said hemicryptophane-chlordecone or said hemicryptophane-hydroxychlordecone cage by fluorescence.

In a particular embodiement, the composition comprise a compound as defined herein in DMSO at a concentration from 0.1 to 10 $\mu$M, preferably 0.5 to 5 $\mu$M, more preferably 0.5 $\mu$M or 5 $\mu$M.

The process and method of the invention are able to detect and/or dose and/or quantify chlordecone or hydroxychlordecone in a contaminated water sample at very low concentrations, for instance from 0.005 to 2 $\mu$g/L.

Another object of the invention a kit comprising (i) a compound as defined herein or a composition adding a composition comprising a compound as defined herein and dimethylsulfoxide, and (ii) a water sample comprising chlordecone or hydroxychlordecone as a combined preparation for detecting, binding, recognizing, capturing, trapping, extracting, quantifying, or dosing chlordecone or hydroxychlordecone. A further object of the invention is a use of such a kit for detecting, binding, recognizing, capturing, trapping, extracting, quantifying, or dosing chlordecone or hydroxychlordecone.

Further aspects and advantages of the invention will be disclosed in the following experimental section, which should be regarded as illustrative and not limiting.

## EXAMPLES

### 1. Preparation of the compounds

### 1.1. Synthesis of compound 5

Synthetic route of compound 5 is illustrated by the following scheme 1.

**Scheme 1:**

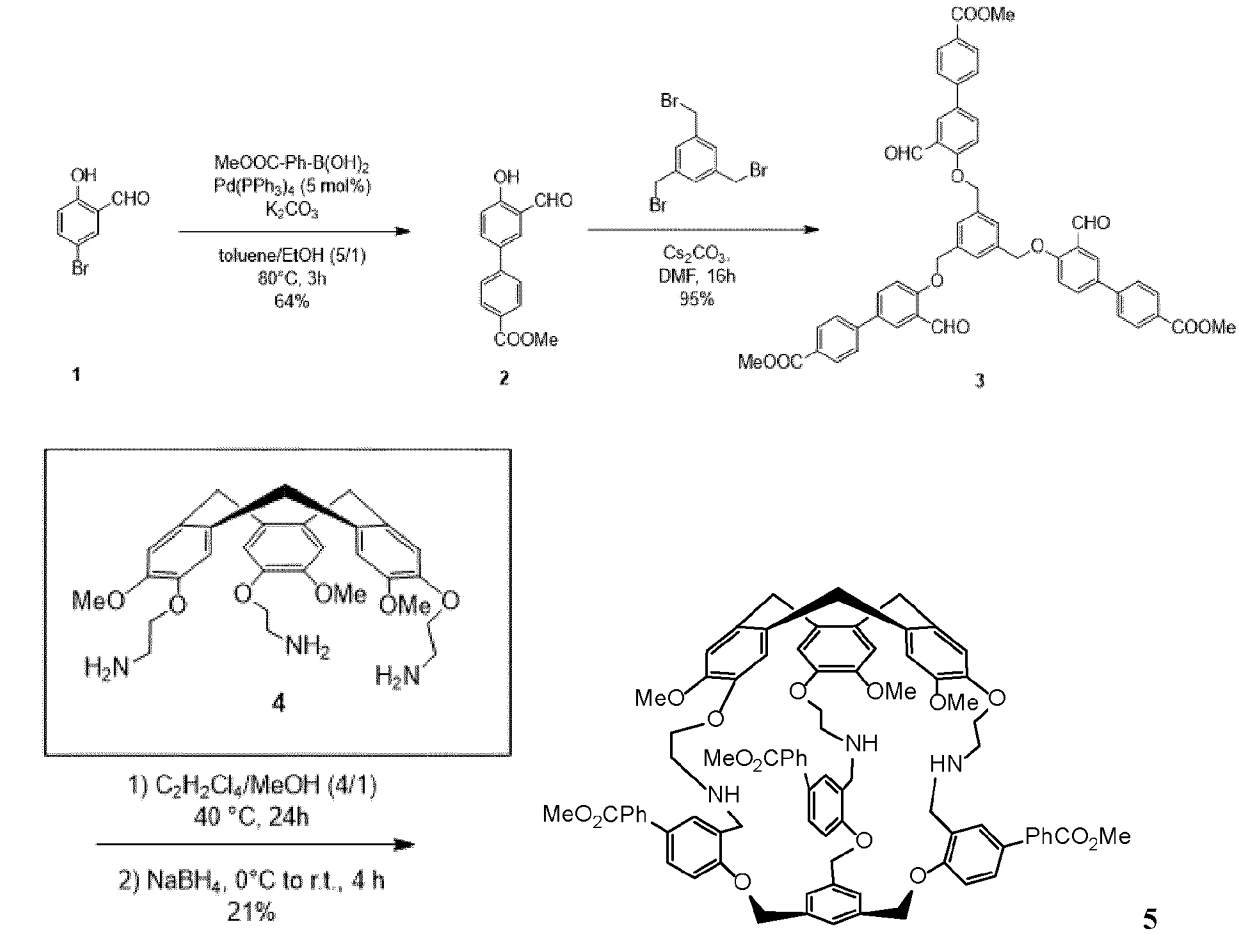


1 2 3 4 5

Synthesis of 2

In a 100 mL round-bottom flask, 5-bromo-2-hydroxybenzaldehyde 1 (282 mg, 1.40 mmol) was dissolved in toluene (20 mL) and EtOH (4 mL) under argon atmosphere. (4-(methoxycarbonyl)phenyl)boronic acid (250 mg, 1.40 mmol), $K_2CO_3$ (483 mg, 3.50 mmol) and $Pd(PPh_3)_4$ (81 mg, 70 μmol) were added successively under stirring. The reaction mixture was heated at 80 °C for 3 h. Solvents were removed under reduced pressure and the reaction mixture was extracted with EtOAc (2 × 30 mL) and washed with a 1M HCl solution (3 × 30 mL). Organic layers were combined, washed, dried over $MgSO_4$ and the solvent was removed. The crude was purified by silica gel column chromatography with petroleum ether and EtOAc (80/20) as eluent to afford 2 as a white solid (230 mg, 64%).

Rf = 0.57 (PE/EtOAc: 80/20).

$^1H$ NMR (400 MHz, $CDCl_3$, 298 K) $\delta$ 11.07 (s, 1H), 9.99 (s, 1H), 8.12 (d, J = 8.5 Hz, 2H), 7.83 - 7.78 (m, 2H), 7.63 (d, J = 8.5 Hz, 2H), 7.11 (d, J = 9.3 Hz, 1H), 3.95 (s, 3H).

$^{13}C$ NMR (100 MHz, $CDCl_3$, 298 K) $\delta$ 196.4, 166.8, 161.6, 143.6, 135.6, 132.1, 132.0, 130.3, 129.0, 126.4, 120.8, 118.4, 52.1.

IR $\sigma$ = 3648, 2987, 1715, 1655, 1607, 1482, 1280 $cm^{-1}$

HRMS (ESI-TOF) m/z: observed 257.0811 $[M+H]^+$ (calculated: 257.0808 for $C_{15}H_{13}O_4$). m.p. = 131 - 132 °C.

Synthesis of **3**

Compound **2** (220 mg, 859 μmol) and 1,3,5-tris(bromomethyl)benzene (93 mg, 260 μmol) were dissolved in DMF (25 mL). $Cs_2CO_3$ (356 mg, 1.09 mmol) was added and the mixture was stirred at 55 °C for 16 h. The solid was filtered on a frit and washed with cold ethanol to yield 3 as a white powder (218 mg, 95%).

$^1H$ NMR (400 MHz, $C_2D_2Cl_4$, 298 K) $\delta$ 10.64 (s, 1H), 8.16 (d, *J* = 2.4 Hz, 1H), 8.13 (d, *J* = 8.4 Hz, 2H), 7.89 (dd, *J* = 8.7; 2.4 Hz, 1H), 7.70 (d, *J* = 8.4 Hz, 2H), 7.64 (s, 1H), 7.22 (d, *J* = 8.8 Hz, 1H), 5.39 (s, 2H), 3.99 (s, 3H).

$^{13}C$ NMR (100 MHz, $C_2D_2Cl_4$, 298 K) $\delta$ 189.6, 166.9, 162.6, 160.7, 143.7, 137.4, 134.7, 133.0, 130.3, 129.0,

127.3, 126.7, 125.9, 125.3, 113.8, 70.3, 52.4.

IR $\sigma$ = 2987, 2900, 1715, 1683, 1602, 1267, 1054 $cm^{-1}$.

HRMS (ESI-TOF) *m/z:* observed 900.3012 $[M+NH_4]^+$ (calculated: 900.3015 for $C_{54}H_{46}NO_{12}$). m.p. = 236 - 237 °C.

Synthesis of **5**

In a 250 mL round-bottom flask was added CTV **4** (80 mg, 0.150 mmol) dissolved in a 4/1 dry mixture of $C_2H_2Cl_4$/MeOH (80 mL) at 40 °C. A solution of 34 (120 mg, 0.140 mmol) in the same mixture of solvent (70 mL) was added dropwise under stirring and the reaction mixture was stirred at 40 °C overnight. NaBH4 (180 mg, 4.75 mmol) was added portion-wise at 0 °C and the mixture was stirred at r.t. during 4 h. Solvents were evaporated, the crude residue was dissolved in $CHCl_3$ (50 mL) and washed with a 0.1 M NaOH solution (50 mL). Aqueous phase was extracted twice with CHCl3 (2 $\times$ 30 mL) and combined organic layers were washed with water (100 mL) and dried over MgSO4. Evaporation of the solvent yielded to a white crude residue which was purified by column chromatography (using first $CHCl_3$/MeOH: 90/10 as eluent to remove by-products and then $CHCl_3$/MeOH: 90/10 + 1% $Et_3N$). Hemicryptophane 5 was obtained as a white solid (40 mg, 21%).

*R*f = 0.31 ($CHCl_3$/MeOH/$Et_3N$: 91/9/1).

$^1$H NMR (400 MHz, $CDCl_3$, 298 K) $\delta$ 7.95 (d, *J*= 8.5 Hz, 2H), 7.51 (d, *J*= 2.3 Hz, 1H), 7.48 (d, *J*= 8.6 Hz, 2H), 7.29 (dd, *J*= 8.9; 2.3 Hz, 1H), 6.97 (s, 1H), 6.92 (s, 1H), 6.79 (s, 1H), 6.63 (d, *J*= 8.7 Hz, 1H), 4.74 (d, *J*= 14.0 Hz, 1H), 4.33-4.17 (m, 4H), 4.05-3.89 (m, 7H), 3.61 (s, 3H), 3.54 (d, *J* = 13.8 Hz, 1H).

$^{13}$C NMR (100 MHz, $CDCl_3$, 298 K) $\delta$ 167.1, 156.5, 148.8, 146.8, 146.8, 144.7, 132.4, 132.1, 130.2, 129.4, 128.5, 127.6, 127.2, 126.7, 126.4, 117.1, 113.6, 112.5, 69.2, 68.3, 56.0, 52.2, 48.0, 47.7, 36.5.

IR $\sigma$ = 3399, 2948, 1715, 1604, 1510, 1492, 1435, 1271, 1220, 1185, 1142, 1112 $cm^{-1}$. HRMS (ESI-TOF) *m/z:* observed 1372.5740 $[M+H]^+$ (calculated: 1372.5740 for $C_{84}H_{82}N_3O_{15}$).

m.p. = > 250°C.

1.2. Synthesis of compound 8

Synthetic route of compound 8 is illustrated by the following scheme 2.

**Scheme 2:**

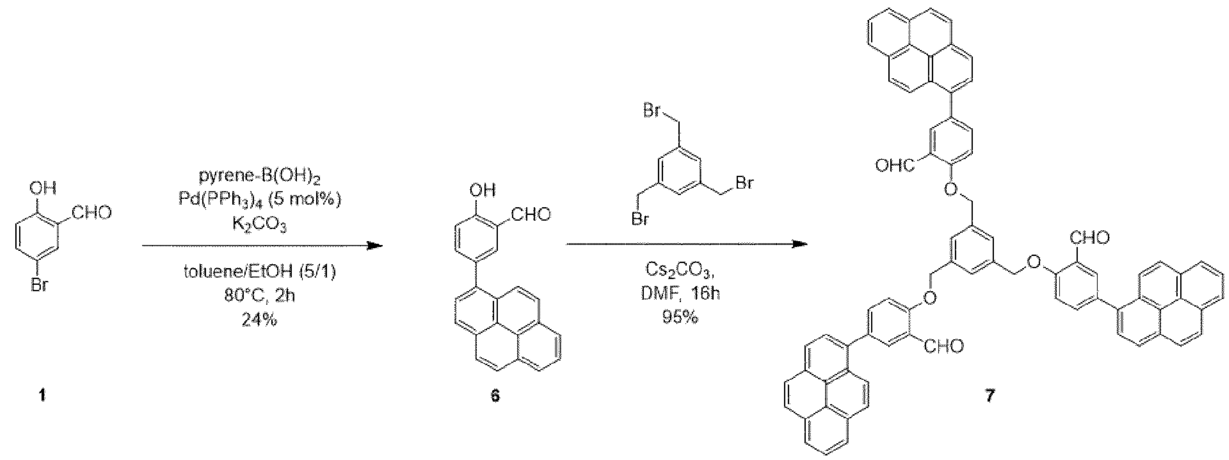


1 6 7

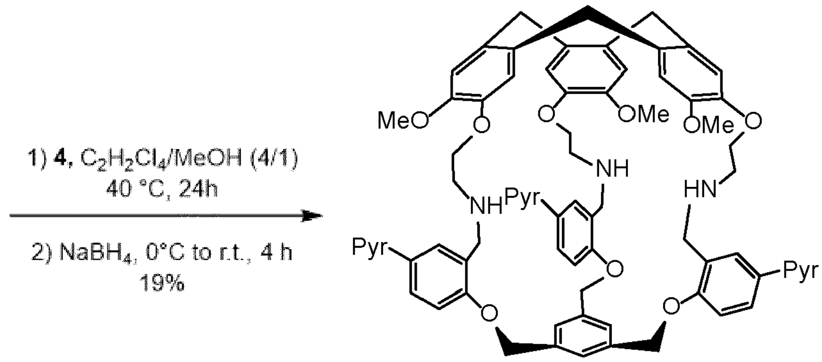


8

Synthesis of **6**

In a 100 mL round-bottom flask, 5-bromo-2-hydroxybenzaldehyde 1 (1.01 g, 5.02 mmol) was dissolved in toluene (25 mL) and EtOH (5 mL) under argon atmosphere. Pyren-1-boronic acid (1.24 g, 5.03 mmol), $K_2CO_3$ (1.73 g, 12.5 mmol) and $Pd(PPh_3)_4$ (300 mg, 260 μmol) were added successively under stirring. The reaction mixture was heated at 80 °C for 2 h. Solvents were removed under reduced pressure and the reaction mixture was extracted with EtOAc (2 × 30 mL) and washed with a 1M HCl solution (3 × 30 mL). Organic layers were combined, washed, dried over $MgSO_4$ and the solvent was removed. The crude was purified by silica gel column chromatography with petroleum ether and EtOAc (80/20) as eluent to afford 6 as a yellow solid (387 mg, 24%).

Rf = 0.45 (PE/EtOAc: 80/20).

$^1H$ NMR (400 MHz, $CDCl_3$, 298 K) $\delta$ 11.16 (s, 1H), 9.98 (s, 1H), 8.25-8.17 (m, 3H), 8.13-8.01 (m, 5H), 7.94 (d, *J* = 7.8 Hz, 1H), 7.82-7.77 (m, 2H), 7.21 (d, *J* = 8.3 Hz, 1H).

$^{13}C$NMR (100 MHz, $CDCl_3$, 298 K) $\delta$ 196.66, 161.00, 139.12, 135.56, 135.18, 133.07, 131.49, 130.92, 130.86, 128.62, 127.91, 127.68, 127.44, 127.37, 126.19, 125.39, 125.05, 124.87, 124.75, 124.58, 120.63, 117.81.

IR $\sigma$ = 3630, 3040, 2987, 1666, 1478, 1257 $cm^{-1}$.

HRMS (ESI-TOF) *m/z:* observed 323.1068 $[M+H]^+$ (calculated: 323.1067 for $C_{23}H_{15}O_2$).

m.p. = 139- 140 °C.

Synthesis of 7

Compound **6** (295 mg, 915 μmol) and 1,3,5-tris(bromomethyl)benzene (100 mg, 280 μmol) were dissolved in DMF (40 mL). $Cs_2CO_3$ (406 mg, 1.24 mmol) was added and the mixture was stirred at 55 °C for 16 h. A solid precipitated upon addition of EtOAc. It was filtered on a frit and washed with cold EtOAc to yield **7** as a yellow powder (287 mg, 95%).

$^1H$ NMR (400 MHz, $C_2D_2Cl_4$, 298 K) $\delta$ 10.79 (s, 1H), 8.30-8.00 (m, 10H), 7.93 (dd, J = 8.6; 2.1 Hz, 1H), 7.80 (s, 1H), 7.39 (d, *J*= 8.7 Hz, 1H), 5.52 (s, 2H).

$^{13}C$ NMR (100 MHz, $C_2D_2Cl_4$, 298 K) $\delta$ 190.00, 160.24, 138.25, 137.69, 135.80, 134.27, 131.47, 130.90, 130.79, 130.59, 128.46, 128.04, 127.80, 127.58, 126.39, 126.04, 125.56, 125.24, 125.16, 125.01, 124.95, 124.81, 113.41, 70.45.

IR $\sigma$ = 2987, 2900, 1683, 1603, 1405, 1260, 1055 $cm^{-1}$.

HRMS (ESI-TOF) *m/z:* observed 1103.3352 $[M+Na]^+$ (calculated: 1103.3343 for $C_{78}H_{48}O_6Na$).

m.p. = 209 - 210 °C.

Synthesis of **8**

In a 250 mL round-bottom flask was added CTV **4** (87.5 mg, 0.163 mmol) dissolved in a 4/1 dry mixture of $C_2H_2Cl_4$/MeOH (80 mL) at 40 °C. A solution of 7 (160 mg, 0.148 mmol) in the same mixture of solvent (90 mL) was added dropwise under stirring and the reaction mixture was stirred at 40 °C overnight. $NaBH_4$ (180 mg, 4.75 mmol) was added portion wise at 0 °C and the mixture was stirred at r.t. during 4 h. Solvents were evaporated, the crude residue was dissolved in $CHCl_3$ (50 mL) and washed with a 0.1 M NaOH solution (50 mL). Aqueous phase was extracted twice with $CHCl_3$ (2 × 30 mL) and combined organic layers were washed with water (100 mL) and dried over $MgSO_4$. Evaporation of the solvent yielded to a white crude residue which was purified by column chromatography (using first $CHCl_3$/MeOH: 90/10 as eluent to remove by-products and then $CHCl_3$/MeOH: 90/10 + 1% $Et_3N$). Hemicryptophane **8** was obtained as a white solid (48 mg, 19%).

Rf = 0.30 ($CHCl_3$/MeOH: 90/10).

$^1H$ NMR (400 MHz, $CDCl_3$, 298 K) $\delta$ 8.22-7.78 (m, 10H), 7.73 (d, *J*= 7.9 Hz, 1H), 7.43 (s, 1H), 7.33 (d, *J* = 8.4 Hz, 1H), 7.07 (d, *J* = 9.9 Hz, 1H), 6.89 (s, 1H), 6.8 (d, *J* = 8.6 Hz, 1H), 4.78 (d, J= 13.6 Hz, 1H), 4.48-4.35 (m, 2H),

4.25-4.1 (m, 2H), 3.9-3.85 (m, 1H), 3.75 (s, 3H), 3.59 (d, J= 13.8 Hz, 1H), 3.45-3.37 (m, 1H), 3.23-3.18 (m, 1H), (3.08-3.08 (m, 1H).

$^{13}C$ NMR (100 MHz, $CDCl_3$, 298 K) $\delta$ 155.6, 148.7, 146.5, 137.2, 136.6, 133.4, 132.5, 131.8, 131.2, 130.7, 130.6, 130.0, 128.1, 127.3, 127.2, 127.1, 127.0, 126.8, 125.6, 124.8, 124.7, 124.6, 124.6, 124.4, 124.3, 113.4, 111.9, 69.16, 68.7, 55.9, 52.7, 49.2, 47.7, 36.3.

IR $\sigma$ = 3346, 3035, 2926, 1668, 1605, 1509, 1495, 1456, 1399, 1262, 1219, 1112 $cm^{-1}$. HRMS (ESI-TOF) *m/z:* observed 786.3316 $[M+2H]^{2+}$ (calculated: 786.3311 for $C_{108}H_{89}N_3O_9$).

m.p. = > 250 °C.

1.3. Synthesis of compound 9

Compound 9 was synthesized according to the procedure disclosed by Scheme 1 of Martinez et al.: J. Org. Chem., 2020, 85 (10), 6400-6407.

## 2. Photophysical studies

The absorption spectrum of a solution in DMSO+2% $H_2O$ of each hemicryptophane **5, 8,** and **9** was recorded between 250 and 500 nm using a quartz cuvette (1 cm$\times$1 cm$\times$ 4.5 cm). The emission spectrum was recorded between 300 and 500 nm. Emission spectra of four solutions of each hemicryptophane in DMSO containing 2% $H_2O$, with absorbance lower than 0.1, were recorded, and the average quantum yield was calculated with quinine bisulfate in H2SO4 (0.5M). All of these solutions afforded the same results. Fluorescence spectra were recorded on a Jasco FP-8600 spectrofluorometer equipped with a JASCO Peltier cell holder ETC-815 to maintain the temperature at 25.0 $\pm$0.2 °C. Absorbance spectra were recorded on a JASCO V730 spectrophotometer.

## 3. Fluorescence titration

A solution of each hemicryptophane (2.5 mL, 5.0 $\mu$M for hosts 9 and 5 and 0.5 $\mu$M for host 8) in DMSO+2% $H_2O$ was transferred into the quartz cuvette. Successive additions of a concentrated chlordecone solution (5.0 mM in the same solvent mixture) were performed. The final volume of the solution was almost unchanged (2.5 mL) since very small volumes of chlordecone solution were added. The solutions were mixed and incubated for 30 s before irradiation at their maximum of excitation (274 nm, 297 nm and 349 nm for hosts 9, 5, 8 respectively) at 25 °C. The corresponding emission values during titration were then recorded. Fluorescence emission spectra are reproduced at Figures 1A (5), 1B (8), and 1C (9) and the relative fluorescence intensities as a function of the [chlordecone]/[hemicryptophane] are reproduced at Figures 2A (5), 2B (8), and 2C (9).

Binding constant (*Ka*) were calculated using Bindfit program and results are reproduced at Table 1 below, further including comparative data obtained according to the same procedure.

Table 1:

| Compound of the inventions | | |
|---|---|---|
| 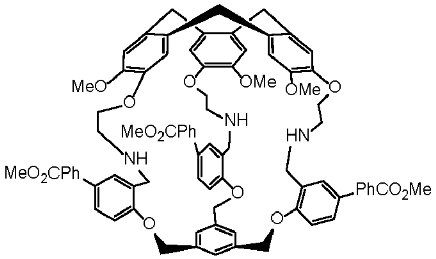 **5** *Ka* = 5.0 x $10^5$ L/mol ± 32% | 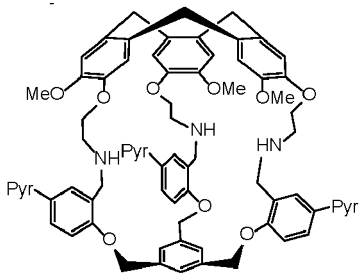 **8** *Ka* = 3.8 x $10^6$ L/mol ± 28% | 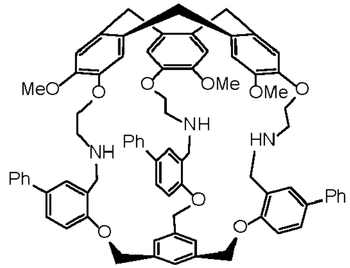 **9** *Ka* = 4.6 x $10^5$ L/mol ± 17% |
| **Comparative** | | |
| 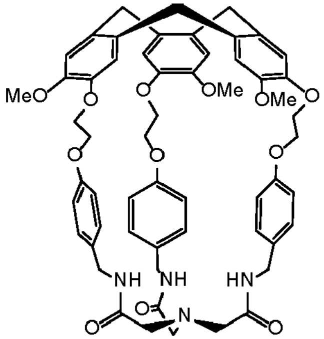 Compound 1[1] *Ka* = 126 L/mol ± 3.7% | 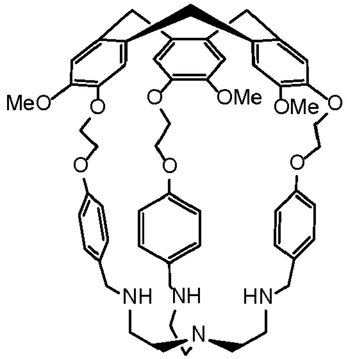 Compound 2[1] *Ka* = 2.1 x $10^4$ L/mol ± 3.4% | |

(continued)

| Comparative | | |
|---|---|---|
| 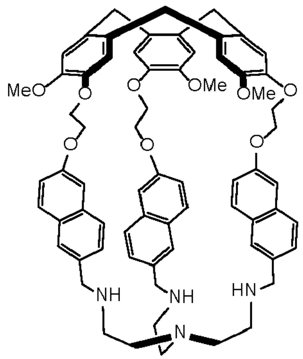 Compound 6[2] *Ka* = 6.4 x $10^3$ L/mol ± 4.4% | 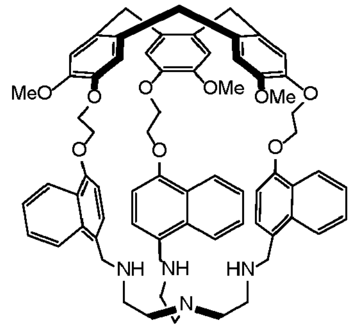 Compound 7[2] *Ka* = 1.0 x $10^4$ L/mol ±6.1% | 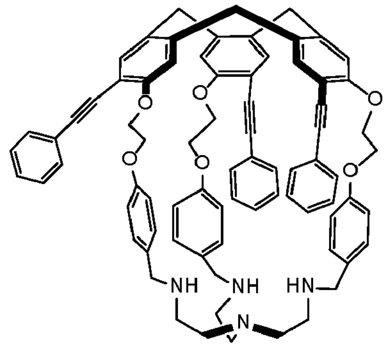 Compound 8[2] *Ka* = 1.4 x $10^5$ L/mol ± 12% |
| 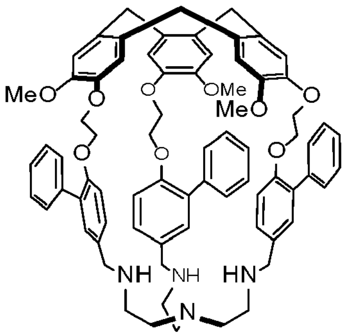 Compound 9[2] *Ka* = 1.9 x $10^4$ L/mol ± 75% | 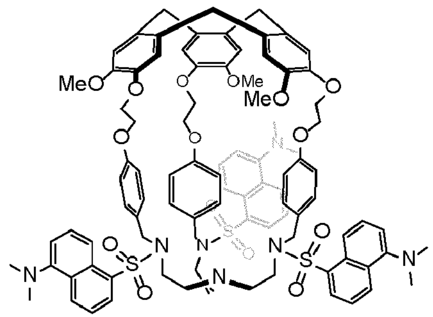 Compound 10[2] *Ka* = 3.0 x $10^3$ L/mol ± 6.9% | |

[1] New J. Chem., 2019, 43, 10222-10226

[2] 50e congrès du Groupe Français de recherche sur les Pesticides" on 18-20 May 2022 at Namur, Belgium

### 4. Detection of Chlordecone in a water sample by fluorescence

The protocol consisted in recording the fluorescence emission spectrum of a solution of hemicryptophane (2.25 mL in DMSO, concentrations of 5 μM, 0.5 μM, 50 nM or 0.5 nM) premixed with an aqueous solution of chlordecone (0.25 mL), in the range of environmental concentrations (from 5 μM to 0.05 nM). Overall, in the presence of increasing concentrations of chlordecone a change in fluorescence for the samples of hemicryptophane was detected.

## Claims

**1.** A compound of the following formula (I):

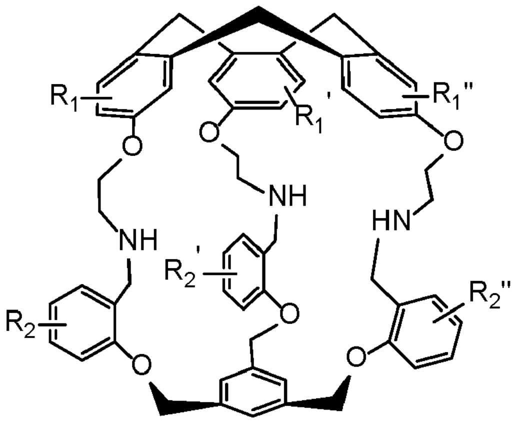

(I),

wherein:

> $R_1$, $R_{1'}$, and $R_{1''}$ represent independently a radical selected in the group consisting of:

- a hydrogen,
- a halogen,
- a hydroxy,
- a $(C_1-C_6)$alkoxy group,
- a $-CO_2-R_a$ or a $(C_1-C_6)$alkyl-$CO_2-R_a$ group with $R_a$ being a hydrogen or a $(C_1-C_6)$alkyl group,
- a $-O-(CH_2-CH_2-O)_n-OH$ with n is an integer comprised between 1 and 600;
- a phenyl unsubstituted or substituted by a radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a $(C_2-C_6)$alkynyl group unsubstituted or substituted by a radical selected in the group consisting of a $(C_1-C_6)$alkyl group and a phenyl unsubstituted or substituted by a radical selected in the group consisting of a $(C_1-C_6)$alkyl group, a halogen, a - $O-(C_1-C_6)$alkyl group, a hydroxy, a nitrile, a-$CO_2-R_a$ with $R_a$ being a hydrogen or a $(C_1-C_6)$alkyl group,
- a nitrile,
- a triazole, and
- a phosphate group; and

> $R_2$, $R_{2'}$, and $R_{2''}$ represent independently a radical selected in the group consisting of:

- a phenyl substituted by a radical selected in the group consisting of a $-CO_2-R_b$ with $R_b$ being a hydrogen or a $(C_1-C_6)$alkyl group, and a $-O-(CH_2-CH_2-O)_n-OH$ with n is an integer comprised between 1 and 600;
- an aryl group, preferably a pyrenyl group;
- a $(C_2-C_6)$alkynyl group unsubstituted or substituted by a radical selected in the group consisting of a $(C_1-C_6)$alkyl group and a phenyl unsubstituted or substituted by radical selected in the group consisting of a $(C_1-C_6)$alkyl group, a halogen, a $-O-(C_1-C_6)$alkyl group, a hydroxy, a nitrile, a-$CO_2-R_a$ with $R_a$ being a hydrogen or a $(C_1-C_6)$alkyl group,
- a triazole, and

- a $(C_2-C_6)$alkenyl group unsubstituted or substituted by a radical selected in the group consisting of a $(C_1-C_6)$alkyl group and a phenyl substituted by a radical selected in the group consisting of a $(C_1-C_6)$alkyl group, a halogen, a -O-$(C_1-C_6)$alkyl group, a hydroxy, a nitrile, a-$CO_2$-$R_a$ with $R_a$ being a hydrogen or a $(C_1-C_6)$alkyl group,

and a salt thereof.

**2.** The compound according to claim 1, wherein the compound has the following formula (I'):

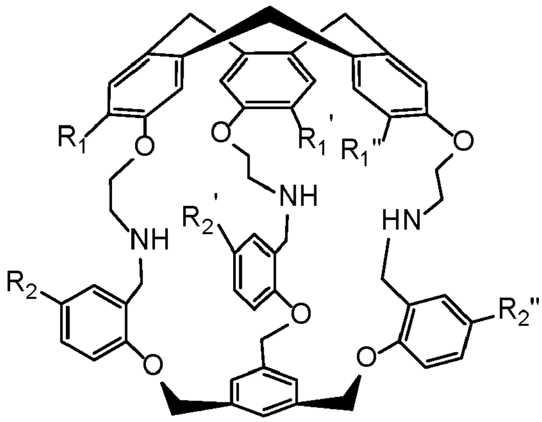

(I'),

in which $R_1$, $R_{1'}$, $R_{1''}$, $R_2$, $R_{2'}$, and $R_{2''}$, are such as defined in claim 1.

**3.** The compound according to claim 1 or 2, wherein $R_1$, $R_{1'}$, and $R_{1''}$ are identical.

**4.** The compound according to any one of claims 1 to 3, wherein $R_1$, $R_{1'}$, and $R_{1''}$ represent independently a $(C_1-C_6)$alkoxy group, preferably a methoxy group.

**5.** The compound according to any one of claims 1 to 4, wherein $R_2$, $R_{2'}$, and $R_{2''}$, are identical.

**6.** The compound according to any one of claims 1 to 5, wherein $R_2$, $R_{2'}$, and $R_{2''}$ represent a phenyl substituted by a -$CO_2$-$R_b$ with $R_b$ being a $(C_1-C_6)$alkyl group, preferably a methyl group, or a pyrenyl group.

**7.** The compound according to any one of claims 1 to 6, wherein said compound has the following formulae:

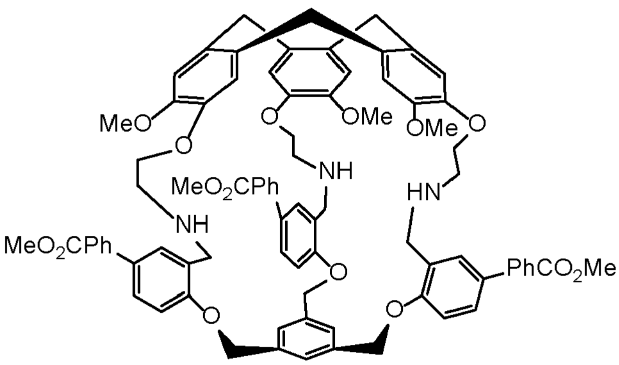

or

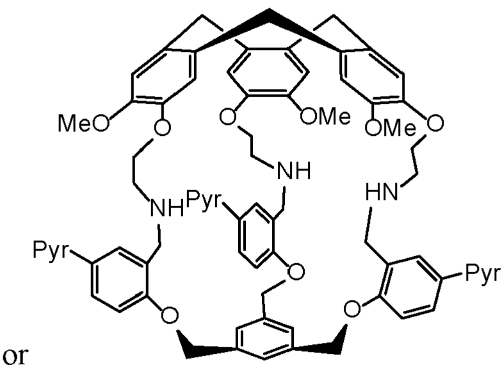

.

**8.** A composition comprising a compound as defined in any one of claims 1 to 7 and dimethylsulfoxide.

**9.** A use of a compound of formula (I) or a salt thereof

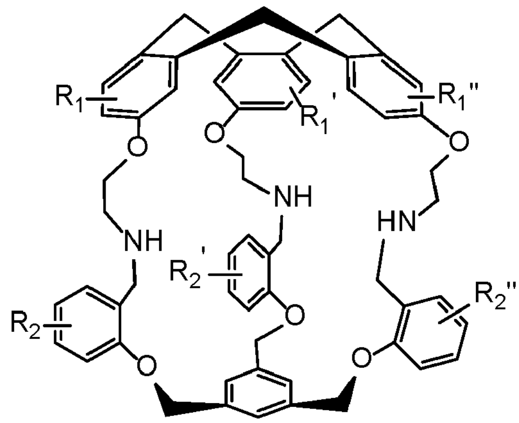

(I),

wherein:

➢ $R_1$, $R_{1'}$, and $R_{1''}$ represent independently a radical selected in the group consisting of:

- a hydrogen,
- a halogen,
- a hydroxy,
- a ($C_1$-$C_6$)alkoxy group,
- a -$CO_2$-$R_a$ or a ($C_1$-$C_6$)alkyl-$CO_2$-$R_a$ group with $R_a$ being a hydrogen or a ($C_1$-$C_6$)alkyl group,
- a -O-($CH_2$-$CH_2$-O)$_n$-OH with n is an integer comprised between 1 and 600;
- a phenyl unsubstituted or substituted by a radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,
- a ($C_2$-$C_6$)alkynyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group,
- a nitrile,
- a triazole, and
- a phosphate group; and

> $R_2$, $R_{2'}$, and $R_{2''}$, represent independently a radical selected in the group consisting of:

- a phenyl unsubstituted or substituted by a radical selected in the group consisting of a -$CO_2$-$R_b$ with $R_b$ being a hydrogen or a ($C_1$-$C_6$)alkyl group, and a -O-($CH_2$-$CH_2$-O)$_n$-OH with n is an integer comprised between 1 and 600;
- an aryl group, preferably a pyrenyl group;
- a ($C_2$-$C_6$)alkynyl group unsubstituted or substituted by a radical selected in the group consisting of a ($C_1$-$C_6$)alkyl group and a phenyl unsubstituted or substituted by radical selected in the group consisting of a ($C_1$-$C_6$)alkyl group, a halogen, a -O-($C_1$-$C_6$)alkyl group, a hydroxy, a nitrile, a-$CO_2$-$R_a$ with $R_a$ being a hydrogen or a ($C_1$-$C_6$)alkyl group,
- a triazole, and
- a ($C_2$-$C_6$)alkenyl group unsubstituted or substituted by a radical selected in the group consisting of a ($C_1$-$C_6$)alkyl group and a phenyl unsubstituted or substituted by a radical selected in the group consisting of a ($C_1$-$C_6$)alkyl group, a halogen, a - O-($C_1$-$C_6$)alkyl group, a hydroxy, a nitrile, a-$CO_2$-$R_a$ with $R_a$ being a hydrogen or a ($C_1$-$C_6$)alkyl group,

for detecting, binding, recognizing, capturing, trapping, extracting, quantifying, or dosing chlordecone or hydroxychlordecone.

**10.** The use according to claim 9, wherein the compound has the following formula (I'):

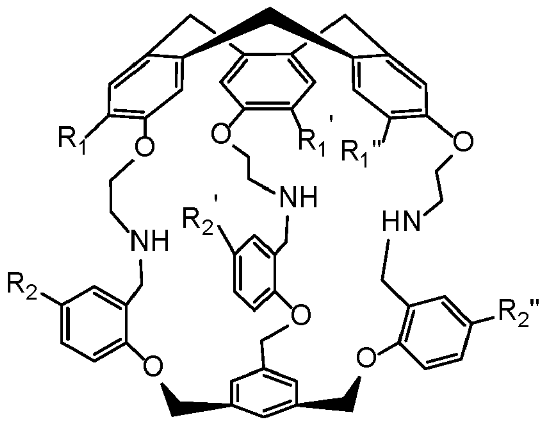

(I'),

in which $R_1$, $R_{1'}$, $R_{1''}$, $R_2$, $R_{2'}$, and $R_{2''}$, are such as defined in claim 9.

**11.** The use according to claim 9 or 10, wherein $R_1$, $R_{1'}$, and $R_{1''}$ are identical, and preferably represent a ($C_1$-$C_6$)alkoxy group, more preferably a methoxy group.

**12.** The use according to any one of claims 9 to 11, wherein $R_2$, $R_{2'}$, and $R_{2''}$ are identical, and preferably represent a phenyl unsubstituted or substituted by a $-CO_2-R_b$ with $R_b$ being a ($C_1$-$C_6$)alkyl group, preferably a methyl group, or a pyrenyl group.

**13.** The use according to any one of claims 9 to 12, wherein the compound has the following formulae:

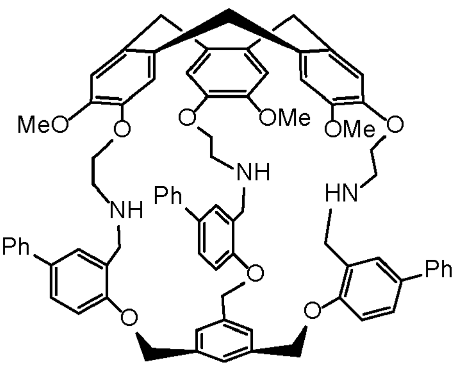

,

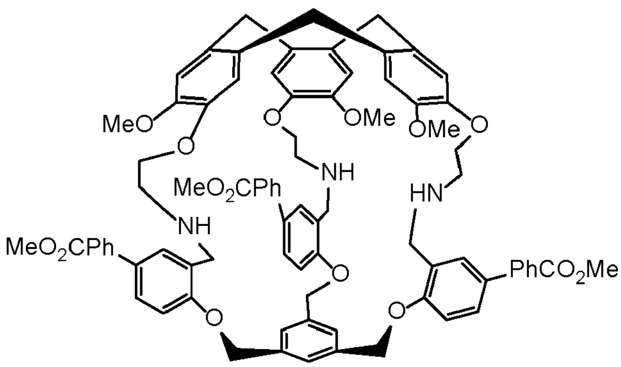

,

or

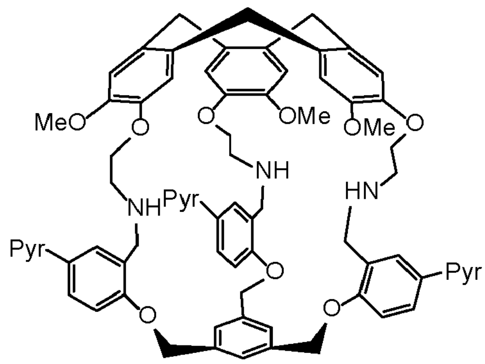

.

**14.** A hemicryptophane cage comprising a compound of formula (I) as defined in any one of claims 9 to 13 and chlordecone or hydroxychlordecone, preferably chlordecone.

**15.** A process for detecting and/or dosing and/or quantifying chlordecone or hydroxychlordecone in a water sample

comprising the following steps:

a) adding a water sample comprising chlordecone or hydroxychlordecone to a composition comprising a compound as defined in any one of claims 9 to 13 and dimethylsulfoxide to form a hemicryptophane-chlordecone or a hemicryptophane-hydroxychlordecone cage; and
b) detecting and/or dosing and/or quantifying said hemicryptophane-chlordecone or said hemicryptophane-hydroxychlordecone cage by fluorescence.

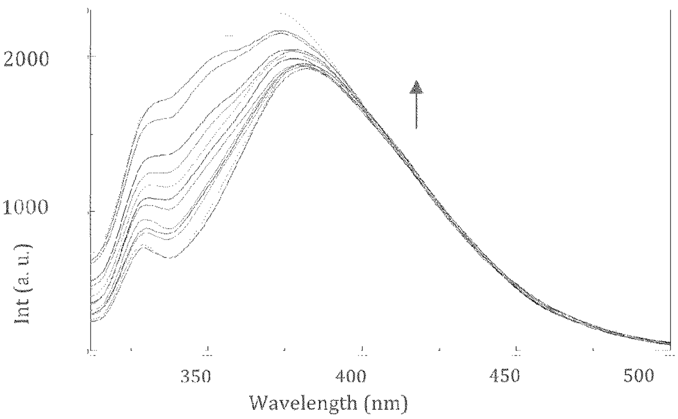


FIGURE 1A

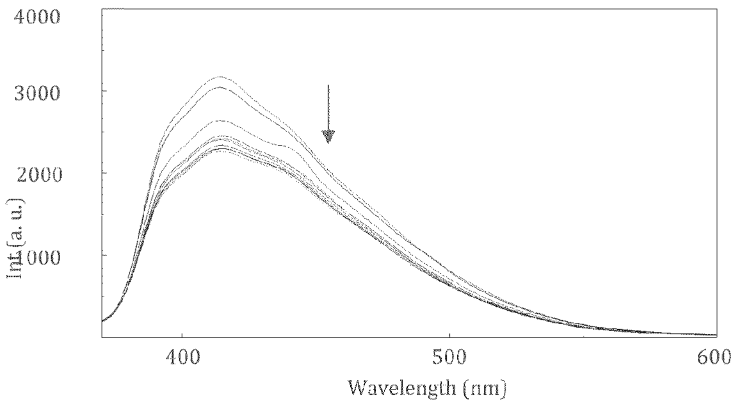


FIGURE 1B

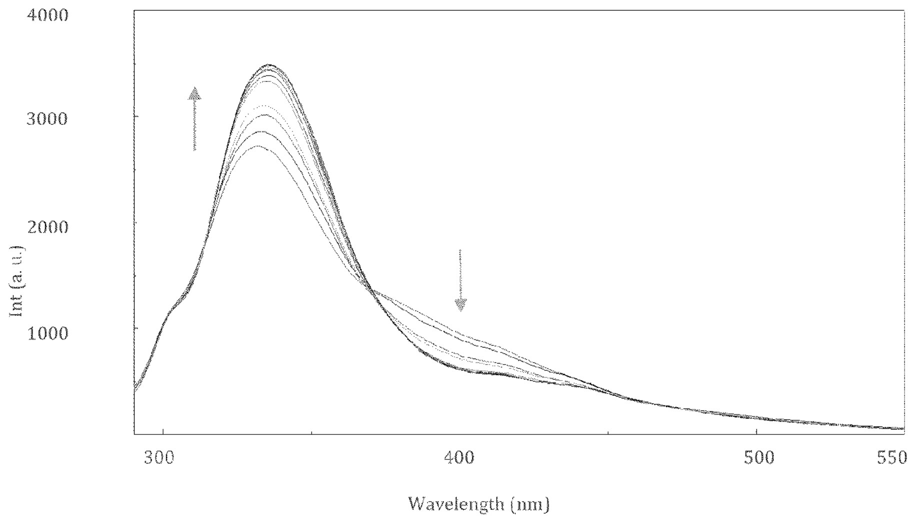


FIGURE 1C

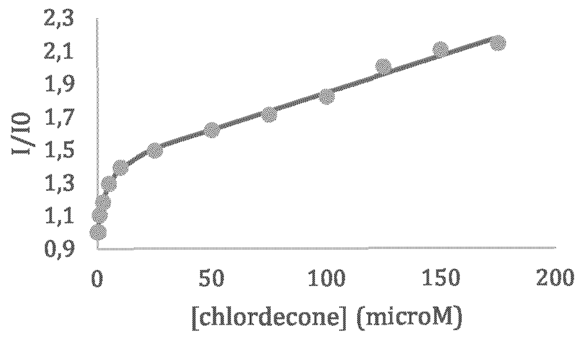


**FIGURE 2A**

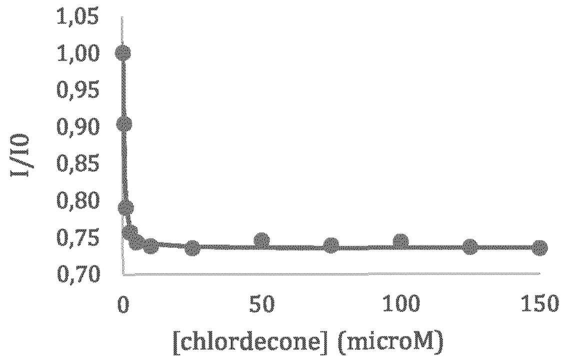


**FIGURE 2B**

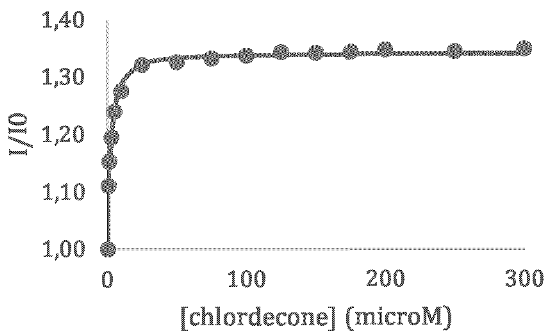


**FIGURE 2C**

Europäisches Patentamt
European Patent Office
Office européen des brevets

# EUROPEAN SEARCH REPORT

Application Number
EP 23 17 2433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LONG AUGUSTIN ET AL: "Hemicryptophanes with Improved Fluorescent Properties for the Selective Recognition of Acetylcholine over Choline", THE JOURNAL OF ORGANIC CHEMISTRY, vol. 85, no. 10, 6 April 2020 (2020-04-06), pages 6400-6407, XP093095595, ISSN: 0022-3263, DOI: 10.1021/acs.joc.0c00217 | 1-5,8 | INV. C09B57/00 |
| Y | * page 6400; figure 1; compounds 2-3 * | 9-15 | |
| A | * page 6402; figure 3 * | 6,7 | |
| | ----- | | |
| Y | DELLA-NEGRA ORIANE ET AL: "Fluorescence Detection of the Persistent Organic Pollutant Chlordecone in Water at Environmental Concentrations", CHEMISTRY - A EUROPEAN JOURNAL, vol. 29, no. 28, 31 March 2023 (2023-03-31), XP093095610, DE ISSN: 0947-6539, DOI: 10.1002/chem.202203887 Retrieved from the Internet: URL:https://onlinelibrary.wiley.com/doi/pdf/10.1002/chem.202203887> | 9-15 | TECHNICAL FIELDS SEARCHED (IPC) |
| | | | C09B |
| A | * page 2 - page 3; figures 1-2; compounds 3-6, 9-11 * * page 6; figure 4 * | 1-8 | |
| | ----- | | |

The present search report has been drawn up for all claims

2

| Place of search | Date of completion of the search | Examiner |
|---|---|---|
| Munich | 31 October 2023 | Jeanjean, Fabien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RANA et al.** *Chemical Engineering,* 2016, vol. 293, 82-89
- **MARTINEZ et al.** *New J. Chem.,* 2019, vol. 43, 10222
- **MARTINEZ et al.** *J. Org. Chem.,* 2020, vol. 85 (10), 6400-6407
- *New J. Chem.,* 2019, vol. 43, 10222-10226